# EUROPEAN PATENT APPLICATION

(11) **EP 1 074 593 A2**
(43) Date of publication of application: **07.02.2001**
(21) Application number: 00116078.7
(22) Date of filing: 27.07.2000
(51) Int. Cl.: C09J 7/02

(54) **Adhesive bands based on plastic films**

(30) Priority: 04.08.1999 IT MI991755
(71) Applicant: Irplastnastri Industria Nastri Adesivi S.p.A., Limite Sull'Arno, Firenze (IT)
(72) Inventor: Scappini, Roberto, 50059 Vitolini-Vinci, Firenze (IT); Bandinelli, Alessandro, 50050 Cerreto Guidi, Firenze (IT); Soluri, Giacomo, 50053 Empoli, Firenze (IT); Scarati, Mario, 20100 Milano (IT)
(74) Representative: Sama, Daniele, Dr.

(57) **Abstract**

Collation and labelling bands based on plastic films, having on one surface an adhesive coating applied in a specific pattern which is transversal to the length of the film, and process for preparing thereof.

## Description

The present invention refers to bands made of plastic films, wherein an adhesive coating is applied onto a part of one surface of said bands according to a pattern transversal to the lenght of the film, or according to defined transversal areas on the bands. Said adhesive bands can be used to collate or label containers, bottles, and various other articles or items.

More in details, the present invention refers to adhesive bands based on plastic films that can be wound up into rolls, for easy handling and application, having a length also exceeding 1000 meters, preferably from 3000 to 10000 meters.

Adhesive collation bands based on or made of plastic films, having one surface coated with adhesives are well known. These bands are commercially supplied also by the Applicant Irplastnastri under the trademark Take Away®, for self-adhesive collation wrapping bands, and under the trademark Label -Tape® for self -adhesive wraparound labelling tapes. Said bands are supplied in the form of rolls having lengths exceeding 1000 meters.

Adhesive bands made of plastic films having one surface partially coated with adhesives, applied onto specific longitudinal patterns, are known. Said adhesive bands are not suitable for wraparound labelling, since for this application it is necessary to use adhesive bands having one surface partially coated with adhesives applied onto a pattern transversal to the length of the band, or applied in specific transversal areas.

The wraparound labelling made with bands based on plastic films having one surface entirely coated with adhesives, cut into a suitable format from a roll, is a relatively slow process, as such suitable for labelling large size containers.

A further disadvantage of said bands is the fact that air bubbles can be trapped between the container and the label, or the fact that wrinkles can be formed.

These bands cause considerable inconveniences during the application to the containers, such as jamming of the labelling machine. Due to this fact, a high number of scraps/rejects is formed.

Said inconveniences can be reduced by decreasing the label application speed, thus adversely affecting the productivity of the process.

A further disadvantage of said adhesive collation bands is that part of the said adhesive coated area is not in contact with the surface of the items to be collated (example: the portion of an adhesive band margin between two bottles in a multipack), and thus dust and other contaminants can be stuck onto said surface. Said exposed adhesive coated areas give an unpleasant tactile feeling and represent for the manufacturer an additional cost and a waste of material, since the adhesive applied onto said areas is not used.

The application speed of said adhesive bands is not high, and if one tries to increase it, jamming of the labelling machine takes place and a high number of scraps/rejects is produced.

Up till now, adhesive collation bands based on plastic films having one surface partially coated with adhesives applied onto a pattern transversal to the length of the band, or applied onto specific transversal areas, suitable for collating or labelling containers, bottles and various other items, without having the above mentioned drawbacks, are not available on the market.

More to the point, the selective removal of the adhesive with the use of doctor blades cannot be used, for the production of self-adhesive collation bands based on plastic films, having an adhesive coating applied in a pattern transversal to the direction of the band, or applied in a definite pattern. As it is known, the removal of the coating made by the use of doctor blades can be done only in longitudinal direction.

In the field of collation wrapping and wraparound labelling it was felt the need to have available collation bands based on plastic films, having one surface partially coated with an adhesive applied onto a pattern transversal to the lenght of the band, or applied in specific transversal areas.

The Applicant has carried out a research on adhesive coating techniques on plastic films in order to obtain on said films adhesive bands having a transversal patterned coating or a specific pattern coating. When using conventional coating technologies, it was found that no satisfactory solution from an industrial point of view could be reached. For instance, when an aqueous acrylic adhesive emulsion was used, by adopting conventional film coating technologies, the following drawbacks were encountered:
- Coalescence of the emulsion under the shear forces produced by the applicator and/or metering rollers, so that the coating of the adhesive onto the film surface could not be achieved.
- Smearing of the adhesive outside the areas to be coated.
- Clogging of the cells of the engraved coating cylinders (rotogravure process).
- The speed of the film coating process was low, due to the machine downtime requested for cylinder cleaning.

The Applicant has suprisingly and unexpectedly found a process to produce adhesive bands based on plastic films, with one surface partially coated with an adhesive applied onto a pattern transversal to the length of the band, or applied in specific transversal areas of said surface, said bands being suitable for collating or wraparound labelling containers, bottles, and other items without any of the drawbacks mentioned above, said process allowing an high adhesive coating speed and an high collation or labelling speed.

An object of the present invention are adhesive bands based on or made of plastic films, having one surface partially coated with an adhesive applied onto a pattern transversal to the length of the film, or applied in specific transversal areas, said bands being suitable for collating or wraparound labelling containers, bottles, and other items, the plastic film of said bands being optionally printed.

The adhesive bands based on or made of the plastic films of the present invention can be wound up into rolls, for easy handling and application, having a length also exceeding 1000 meters, preferably comprised between 3000 and 10000 meters.

The width of the bands of the present invention is typically comprised between about 2 cm and about 50 cm, the label length or band cut-length is typically comprised between about 10 cm and about 1 m; the patterned adhesive coated areas, applied in registration with the cut-length position of the label or band, have a width typically comprised between 1 cm and 10 cm.

The applicable adhesives are those commercially available, preferably aqueous adhesive emulsions, more preferably aqueous acrylic polymer adhesive emulsions. Usually, the viscosity of the emulsion is comprised between 50 (0.05 Pa.s) to 1000 cP (1 Pa.s), preferably between 100 cP (10⁻¹ Pa.s) and 500 cP (0.5 Pa.s), said viscosities determined at the application temperature, that is comprised between 0 and 60°C, preferably between 20 and 40°C.

The coating dry weight per unit area on the coated areas is usually comprised between 5 and 50 g/m², preferably comprised between 10 and 30 g/m².

The preferred adhesives are those that can be of a removable nature, allowing the collation band or label to be removed from the surface onto which they are applied. Said removable adhesives have the advantage that they do not leave adhesive residues when the collation band or wraparound label is detached from the container(s); further, they do not damage the surface onto which they are applied.

The base plastic film from which the bands of the present invention are made can be based on any polymeric material. As an example, it is possible to use polypropylene films, preferably bioriented polypropylene films (OPP), bioriented films based on copolymers of propylene with ethylene, and/or alpha-olefins having a carbon atom number comprised between 4 and 10, preferably between 4 and 6, polyethylene or polymers of ethylene with one or more alpha-olefins having a carbon atom number comprised between 3 and 10, preferably between 3 and 6, bioriented polyethyleneterephtalate (PET), PVC, etc.

It is also possible to use coextruded films based on the above mentioned polymeric materials, preferably coextruded bioriented polypropylene films based on or made of propylene-based copolymers.

Preferably, the base film used is a homopolymer-based bioriented polypropylene, where one of its surfaces has been subjected to treatments for enhancing its surface tension, so as to guarantee a high adhesion of inks and coatings onto the film. Examples of such treatments are well known in the art, such as corona, flame, plasma treatments.

The preferred films are those that do not require a release coating on the outer side of the film (the side opposite to the side coated with the adhesive). The preferred film is a homopolymer-based bioriented polypropylene (OPP) film

This represents a remarkable advantage for easy winding and unwinding of the adhesive coated rolls. If the base film has no intrinsic anti-adhesive properties, it is necessary to apply an anti-adhesive coating on its outer surface, to allow the easy winding/unwinding of the adhesive-coated film rolls.

As mentioned, the adhesive coated bands of the present invention can be easily wound into rolls and subsequently unwound for the application above mentioned. When using the preferred polymeric film (an OPP film), they do not require the use of a release liner (e.g. silicone coated kraft paper) laminated with their adhesive-coated surface, .

It is possible to use plastic films having uniaxial or biaxial heat shrink properties, preferably uniaxial heat shrink properties in the longitudinal direction of the film.

The longitudinal heat shrink values, determined in accordance to the OPMA TC 4 (Oriented Polypropylene Manufacturers' Association) (130°C - 5 min in air) are generally comprised between 10 and 70%, and preferably between 20 and 40%. Heat shrink is generally performed at temperatures comprised between 60 and 200°C, and preferably between 80 and 140°C. Preferably, these heat shrinkable films are made of polypropylene homopolymer, propylene copolymers with alpha-olefins and their admixtures, optionally together with polyethylene or copolymers of ethylene with alpha-olefins as mentioned before.

Said heat shrink properties allow a retraction of the label or collation band, after application and during passage through a heat shrink oven, so as to obtain a tight collation pack, or an optimal conformance of the label onto containers having concave, convex, or irregular shapes.

The adhesive bands of the present invention can be subjected to processes that allow an easy opening of the collated pack, or the easy removal of the label.

These processes comprise pressure cutting, or laser cutting, yielding to the formation of nicks in definite positions on the edge of the band, application of tear tapes and other easy-opening devices.

Said processes can be carried out during the preparation of the collation band or labels, before winding them into rolls, or during the application of the collation band or label onto the manufactured articles (e.g. bottles).

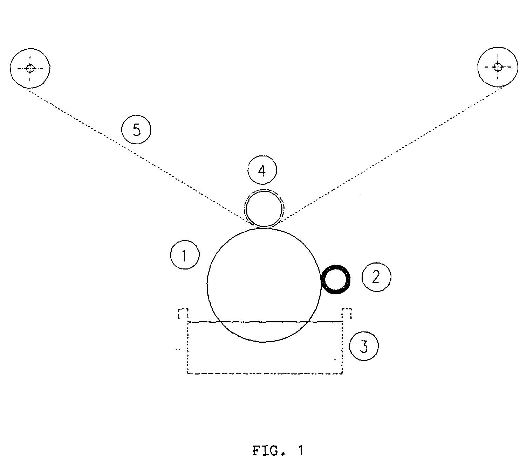

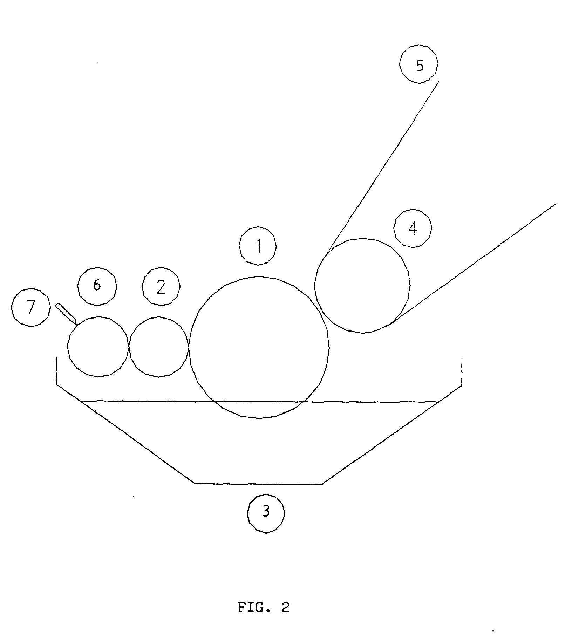

A further object of the present invention is an apparatus or adhesive coating machine that allows the preparation of the collation bands or labels of the invention. The apparatus is shown in Fig. 1 and 2. The meaning of the reference numbers of Fig. 1 is the following one:
1. application roller (A),
2. metering roller system (D),
3. pan with adhesive emulsion,
4. pressure roller (P),
5. plastic film to be pattern coated with the adhesive, the application roller (1) has a smooth surface, said roller made of steel or chrome plated steel, optionally rubber-coated steel, e.g. silicone rubber.

The metering roller system (2) in a first embodiment is formed of a metering roller (2) generally made of steel, covered with an open-cell structured porous layer of a polymeric expanded material, constituted of rubber or elastomers. It is possible to use for said porous layer styrene-butadiene elastomers (SBR), ethylene-propylene-diene elastomers (EPDM), polyurethanes, etc.

The apparent density of said rubbers or elastomers is generally comprised between 0.05 and 0.6 g/cm³, preferably between 0.1 and 0.3 g/cm³. The size of the cells of the open cell structured porous layer, determined through micrographic examination of a cross-section of the material, is comprised between 50 and 1000 µm, and preferably between 100 and 300 µm. The open-cell structure of said porous material is constituted by a network of interconnected empty cells that can absorb liquids, such as the aqueous emulsions of the present invention. These open-cell structured polymeric expanded materials are commercially available.

The thickness of the porous layer applied onto the metering roller (2) is generally comprised between 2 and 20 mm, preferably between 5 and 10 mm. The porous layer is usually applied onto the metering roller (2) with adhesives such as those used to apply flexographic plates or sleeves. It is also possible to use structural adhesives such as epoxy resins.

The pressure roller (4) has relevant printing areas (protrusions). It is generally made of steel, covered by a printing matrix, generally constituted by a photopolymer flexographic printing sleeve having relevant printing areas (protrusions) or a rubber sleeve having relevant printing areas. Typical Shore A hardness (ASTM D 2240-81) of the photopolymer or rubber typically ranges from 20 to 70, more preferably from 30 to 60.
The relevant printing areas (protrusions) of the pressure roller (4) are those that allow the contact of the film with the application cylinder (1), only in those areas of the film where the adhesive coating must be applied.

The process to obtain the adhesive bands of the present invention, performed with the above described apparatus of Fig. 1, comprises the following steps:
- the application roller (1) conveys an excess of adhesive emulsion from the pan where the emulsion is continuously recirculated in order to avoid the coalescence of the emulsion;
- the metering roller (2) eliminates any excess of adhesive emulsion from the application roller (1), leaving a metered amount of adhesive on the application roller (1),
- the adhesive emulsion is transferred onto specific areas of the film surface (5), which are kept in contact with the application roller (1), by the action of the relevant parts (protrusions) of the surface of the pressure roller (4);
- the pressure roller (4) co-rotates with the film to be coated (5), viz, the direction and versus of its peripheral speed are the same as those of the linear speed of the film;
- the application roller (1) acts in counter-rotation with the film to be coated, viz. its peripheral speed is opposite to that of the film, and the value of the speed of the application roller (1) is comprised between 50 and 120% of that of the film, and preferably between 90 and 110% of that of the film.

The application roller (1) is in contact with the metering roller (2) and forces this latter roller to rotate; the pressure of the application roller (1) on the metering roller (2), and thus the resulting adhesive coating weight, can be varied by varying the distance between the axis of the application roller (1) and that of the metering roller (2).

This process can be industrially used for large scale production of the adhesive bands of the present invention, obtaining even very long rolls, without the occurrence of film breakages during the manufacturing process or lengthy shutdowns for cleaning of the machine rollers.

In fact it has been found that the combination of the peculiar features of the application roller (1) and the metering roller (2) avoid either the coalescence of the adhesive emulsion or the related build-up of solid adhesive residues onto the machine parts.

It has been found that the peculiar porous structure of the metering roller (2) is very efficient and avoids coalescence of the emulsion, clogging or build-up of solid adhesive residues.

Coating speed, i.e. the linear films speed of (5), can be also very high, higher than 50 m/min, preferably higher than 100 m/min, e.g. 200 m/min, thus yielding to a very high productivity of the process of the invention.

The peculiar configuration of the most important parts of the coating machine is shown in Fig. 1. In particular it is noted that the smooth surface of the application roller (1) onto which the adhesive coating is applied, combined with the position of the protruding matrix on the pressure roller (4), that is in contact with the side of the film opposite to that to be coated, avoids that the matrix of the pressure roller (4) be clogged by solid adhesive residues, thus the coating machine of the invention allows to obtain adhesive bands wherein the adhesive is precisely applied according to a definite pattern, without the formation of smears.

In a second embodiment (Fig. 2) the metering roller system (2) of the apparatus can be as follows in order to obtain a very precise metering of the adhesive emulsion, with a point-to-point variation of the thickness of the adhesive layer better than plus/minus 10% and preferably better than plus/minus 5%. The other reference numbers of the apparatus being the same of Fig. 1.

The metering roller system (2) according to Fig. 2 is made of a metering roller (2), a squeeze roller (6) and a doctor blade (7).

The metering roller (2) is made of rubber-coated steel, e.g. coated with silicone rubber or SBR rubber, said rubber having a Shore A hardness (ASTM D 2240-81) generally from 20 to 50, preferably from 25 to 45.

The metering roller (2) is in contact with a squeeze roller (6), generally made of steel or chrome plated steel, and having a smooth surface.

The squeeze roller (6) is in contact with a doctor blade (7), which generally is made of steel or of hard plastic materials such as PTFE, high density polyethylene, polyacetalic resins, etc.

The squeeze roller (6) is kept pressed against the metering roller (2). Any excess of adhesive emulsion remaining on the metering roller (2) is eliminated through the squeeze roller (6). The surface of the squeeze roller (6) is cleared from the residual quantity of adhesive emulsion by the doctor blade (7). The doctor blade (7) usually acts at a positive angle, viz. an acute angle against the sense of rotation of the squeeze roller (6). Alternatively the doctor blade (7) can act at a negative angle against the sense of rotation of the squeeze roller (6).

The metering roller (2) acts in counter rotation with the application roller (1). The peripheral speed of the metering roller (2) is comprised between 10 and 60%, preferably between 20 and 40% of that of the application roller (1).

The squeeze roller (6) acts in counter rotation with the metering roller (2). The peripheral speed of the squeeze roller (6) is comprised between 80 and 140%, preferably between 90 and 110% of that of the metering roller (2).

Coating speed with the embodiment of Fig. 2, i.e. the linear films speed of (5), can be also very high, higher than 50 m/min, preferably higher than 150 m/min, e.g. 250 m/min, thus yielding to a very high productivity of the process of the invention.

The following examples are only illustrative of the invention without any limitation of the scope of the invention.

### EXAMPLE 1

An adhesive collation band having a transversal coating pattern has been prepared using 40 µm OPP film, reverse printed in 8-colour rotogravure with solvent-based inks.

The printed film has been coated with a removable adhesive aqueous acrylic emulsion PRIMAL®PS83D (Rohm & Haas), having a dry content of 53%.

The adhesive has been applied onto the film by the process of the invention by using the apparatus of Fig. 1, with the metering system (2) therein described, by coating transversal patterned areas having a cut length of 400 mm, and a length of each individual coated area (in the longitudinal web direction) being of 80 mm. The coating weight of the adhesive (dry) applied onto the coated areas is of 18 g/m².

The peripheral speed of the applicator roller (1), of the metering roller (2), and of the pressure roller (4) is of 250 m/min, The application roller acting in counter rotation with reference to the film direction.

The used metering roller (2) was a polished steel roller having a diameter of 120 mm, covered with a sleeve made of SBR rubber having a thickness of 3 mm, with an outer layer of open-cell expanded nitrilic rubber having an apparent density of 0.3 g/cm³, and a thickness of 10 mm.

The coating process has been continued for 10 hours, without any clogging of the metering roller (2).

During the coating process no coalesced or solid adhesive residues have been formed onto the surface of the application roller (1), and no scraps or rejects have been produced.

The coated web has been slit into smaller rolls having a width of 120 mm. These rolls have been used for labelling cubic shape 5-liter containers (Cubitainer®) containing detergents.

The labelling process has been carried out on a Twin Pack® labelling machine. The label, kept in contact with the container by its adhesive-coated leading and trailing edges (40 mm wide) had a much better appearance than a label having a full adhesive coverage.

Furthermore, labelling speed on the labelling machine has reached 70 labels/min. The absence of the adhesive coating in the center of the label has allowed a tight conformance of the labels onto the surface of the container, thus eliminating the drawbacks due to wrinkles and air bubbles typical of the labels having a full adhesive coverage (see comparative ex. 2).

Besides, the labels obtained in accordance to the invention maintained a good conformance to the deformations of the container during use, caused by variations in its internal pressure and/or temperature variations, without any of the drawbacks mentioned before.

### EXAMPLE 2 (comparative)

A coated web having the same size of that used in Example 1 has been used, but having a full adhesive coverage on one side (Label Tape® commercially available from Irplastnastri).

The labelling process has been carried out using the same labelling machine and the same cubic containers of the Example 1.

In this case the application speed on the labelling machine did not exceed 50 labels/min. Besides, the formation of air bubbles and wrinkles has been experienced.

### EXAMPLE 3

An adhesive collation band having a transversal adhesive coating pattern has been manufactured by using a 35 µm OPP film, reverse printed in 6-colour flexography with solvent-based inks.

Said printed film has been coated with the removable adhesive aqueous acrylic emulsion of Example 1.

The adhesive has been applied with the process and apparatus described in Ex. 1 with the following differences:
- the partial adhesive coating on one surface of the film was made by coating patterned areas transversal with respect to the longitudinal direction of the film, having a cut length of 350 mm and a length of the coated area (in the longitudinal web direction) of 150 mm.
- The coating weight of the adhesive (dry) applied onto the coated areas has been of 25 g/m².

The coating process has been continued for 8 hours at a speed of 150 m/min, without any clogging of the metering roller (2) used, said roller constituted by a polished steel roller having a diameter of 100 mm, covered with a layer of an open-cell expanded nitrilic rubber having an apparent density of 0.5 g/cm3, and a thickness of 12 mm.

During the process no formation of coalesced solid adhesive residues onto the surface of the application roller (1) has occurred.

The coated web has been slit into smaller rolls having a width of 90 mm. These rolls have been used for the collation of two PET 1.5-liter soft drink bottles, using a Twin Pack® multipacking machine. The multipack thus obtained has shown the same solidity and tight wrapping of a similar pack produced with an adhesive collation band having a full coverage of adhesive on its surface.

The multipack prepared with the adhesive collation band having a partial adhesive transversal coating pattern has not shown the typical drawbacks of conventional multipacks, such as dust contamination on those adhesive-coated areas of the collation band not adhering to the surface of the bottles of the multipack.

Besides, the absence of adhesive coating in the visible and unprinted areas of the bands according to the invention has increased the transparency and clarity of the band, with positive results for the appearance of the multipack obtained therefrom.

The application speed of the multipacking machine using the adhesive collation band of the present invention has reached 90 packs/min.

By using a conventional commercially available Take Away® collation band (with full adhesive coverage on one surface), the maximum application speed of the multipacking machine has been 60 packs/min.

A further advantage of the process of the invention is given by the reduced consumption of adhesive, that has been approximately 60% in comparison with that required when using the multipack a commercially available collation band having a full adhesive coverage on one surface.

### EXAMPLE 1A

An adhesive collation band having a transversal coating pattern has been prepared using a 35 µm OPP film, reverse printed in 10-colour rotogravure with solvent-based inks.

The printed film has been coated with a removable adhesive aqueous acrylic emulsion Primal®OS83D (Rohm & Haas), having a dry content of 53%. The adhesive has been applied onto the film according to the apparatus of Fig. 2 and the process described in the description, with the metering system (2) therein described, by coating transversal patterned areas having a cut length of 360 mm, and a length of each individual coated areas (in the longitudinal web direction) of 75 mm.

The coating weight of the adhesive (dry) applied onto the coated areas was of 18 g/m². The linear speed of the film to be coated (5) was of 200 m/min, the peripheral speed of the metering roller (2) was of 80 m/min, the peripheral speed of the squeeze roller (6) was of 85 m/min.

The coating process has been continued for 9 hours, without any build-up of coalesced adhesive residues on the rollers. No scraps or rejects have been produced.

The coated web has been slit into smaller rolls having a width of 140 mm. These rolls have been used for labelling round shaped 3-liter containers made of HDPE.

The labelling process has been carried out on a Twin Pack® labelling machine. The labels were kept in contact with the container by its adhesive-coated leading and trailing edges (37.5 mm wide), and showed a very good conformance to the shape of the container and to thereof dimensional variations caused by temperatures changes.

Labelling speed reached 85 labels/min, without jamming of the labelling machine or formation of scraps and rejects.

Conversely, the labels having a full adhesive coverage, as shown in comparative example 2, showed a poor conformance. The formation of wrinkles and air bubbles entrapped between the labels and the containers was observed.

## Claims

1. Adhesive bands based on or made of plastic films, having one partially coated adhesive surface, the adhesive applied onto a pattern transversal to the direction of the band, or applied in a specific transversal pattern, said bands being suitable for collating or wraparound labelling containers, bottles, and other items, the plastic film of said bands being optionally printed.

2. Adhesive bands according to claim 1 wound into rolls having a length exceeding 1000 meters, preferably comprised between 3000 and 10000 meters.

3. Adhesive bands according to claims 1 and 2 having width comprised between about 2 cm and about 50 cm; the label or band cut-length being comprised between about 10 cm and about 1 m; the patterned adhesive coated areas, applied in registration with the cut-length position of the label or band, having a width comprised between 1 cm and 10 cm.

4. Adhesive bands according to claims from 1 to 3, wherein the adhesives are aqueous adhesive emulsions.

5. Adhesive bands according to claim 4, wherein the aqueous adhesive emulsions are aqueous acrylic adhesive emulsions.

6. Adhesive bands according to claims 4 and 5, wherein the viscosity of the emulsion is comprised between 50 (0.05 Pa.s) to 1,000 cP (1 Pa.s), preferably between 100 cP (10⁻¹ Pa.s) and 500 cP (0.5 Pa.s), determined at a temperature comprised between 0 and 60°C, preferably between 20 and 40°C.

7. Adhesive bands according to claims from 1 to 6, wherein the coating dry weight per unit area on the coated areas is usually comprised between 5 and 50 g/m², preferably comprised between 10 and 30 g/m².

8. Adhesive bands according to claims from 1 to 7, wherein the adhesives are of a removable nature.

9. Adhesive bands according to claims from 1 to 8, wherein the plastic film is based or made of polymeric materials.

10. Adhesive bands according to claim 9, wherein the polymeric material is polypropylene, preferably bioriented polypropylene (OPP), bioriented copolymers of propylene with ethylene and/or alpha-olefins having a carbon atom number comprised between 4 and 10, preferably between 4 and 6, polyethylene or polymers of ethylene with one or more alpha-olefins having a carbon atom number comprised between 3 and 10, preferably between 3 and 6, bioriented polyethyleneterephtalate, PVC.

11. Adhesive bands according to claim 10, wherein the plastic film is a coextruded bioriented polypropylene film based on propylene copolymers.

12. Adhesive bands according to claims from 9 to 11, wherein the plastic film does not require a release coating on the outer side of the band.

13. Adhesive bands according to claim 12, wherein the plastic film used is a homopolymer-based bioriented polypropylene (OPP).

14. Adhesive bands according to claims from 9 to 13, wherein the plastic films have uniaxial or biaxial heat shrink properties, preferably uniaxial heat shrink properties in the longitudinal direction of the film.

15. Adhesive bands according to claim 14, wherein the longitudinal heat shrink values, determined in accordance to the OPMA TC 4 (Oriented Polypropylene Manufacturers' Association) (130°C - 5 min in air) are comprised between 10 and 70%, and preferably between 20 and 40%.

16. Adhesive bands according to claims 14 and 15, wherein the heat shrinkable films are made of polypropylene homopolymer, propylene copolymers with alpha-olefins and their admixtures, optionally together with polyethylene or copolymers of ethylene with alpha-olefins.

17. Adhesive bands according to claims from 1 to 16, wherein the adhesive bands are subjected to processes that allow the easy opening of the multipack or the easy removal of the label.

18. Adhesive bands according to claim 17, wherein said processes that allow the easy opening of the multipack or the easy removal of the label comprise the process of pressure cutting, or laser cutting, the formation of nicks in definite positions on the edge of the band, and the application of tear tapes.

19. Apparatus for the manufacture of the adhesive bands according to claims from 1 to 18 according to Fig. 1 and 2, comprising:
1. an application roller (A),
2. a metering roller system (D),
3. a pan with adhesive emulsion,
4. a pressure roller (P),
5. a plastic film to be coated with adhesive, the application roller (1) has a smooth surface.

20. Apparatus according to claim 19 wherein the metering roller system (2) according to Fig. 1 is made of a metering roller (2) covered with an open-cell structured porous layer of a polymeric expanded material, the size of the cells of the open cell structured porous layer is comprised between 50 and 1000 µm, preferably between 100 and 300 µm; the thickness of the porous layer applied onto the metering roller (2) is comprised between 2 and 20 mm, preferably between 5 and 10 mm.

21. Apparatus for the manufacture of the adhesive bands according to claim 20 wherein the porous layer of expanded material of the metering roller (2) is made of rubber or of an elastomer, preferably chosen between styrene-butadiene (SBR) elastomers, ethylene-propylene-diene elastomers (EPDM), polyurethanes.

22. Apparatus according to claim 19 wherein the metering roller system (2) according to Fig. 2 is made of a metering roller (2), a squeeze roller (6) and a doctor blade (7), the metering roller (2) is made of rubber-coated steel, e.g. coated with silicone rubber or SBR rubber, said rubber having a Shore A hardness preferably from 20 to 50, more preferably from 25 to 45; the metering roller (2) is in contact with a squeeze roller (6), preferably made of steel or chrome plated steel, and having a smooth surface; the squeeze roller (6) is in contact with a doctor blade (7), preferably made of steel or of hard plastic materials preferably PTFE, high density polyethylene, polyacetalic resins; the squeeze roller (6) is kept in contact with the metering roller (2).

23. Process for the manufacture of the adhesive bands according to claims from 1 to 18, performed by the apparatus of claims 19-21 (Fig. 1) comprising the following steps:
- the application roller (1) conveys an excess of adhesive emulsion from the pan,
- the metering roller (2) eliminates any excess of adhesive emulsion from the application roller (1), leaving a metered amount of adhesive on the application roller (1),
- the adhesive emulsion is transferred from the application roller (1) onto the film surface (5), kept in contact with the application roller (1) by the action of the relevant parts (protrusions) on the surface of the pressure roller (4),
- the pressure roller (4) co-rotates with the film to be coated (5),
- the application roller (1) acts in counter-rotation with the film to be coated with a speed of the application roller (1) comprised between 50 and 120%, preferably between 90 and 110% of the linear speed of the film.

24. Process according to claim 23 wherein the film speed is higher than 50 m/min, preferably higher than 100 m/min.

25. Process for the manufacture of the adhesive bands according to claims from 1 to 18, performed by the apparatus of claim 22 (Fig. 2) comprising the following steps:
any excess of adhesive emulsion remaining on the metering roller (2) is eliminated through the squeeze roller (6); the surface of the squeeze roller (6) is cleared from the residual quantity of adhesive emulsion by the doctor blade (7); the doctor blade (7) acts at a positive angle, viz. an acute angle against the sense of rotation of the squeeze roller (6); the metering roller (2) acts in counter rotation with the application roller (1); the peripheral speed of the metering roller (2) is comprised between 10 and 60%, preferably between 20 and 40% of that of the application roller (1); the squeeze roller (6) acts in counter rotation with the metering roller (2), the peripheral speed of the squeeze roller (6) is comprised between 80 and 140%, preferably between 90 and 110% of that of the metering roller (2), the linear films speed of (5) is higher than 50 m/min, preferably higher than 150 m/min, more preferably 250 m/min;
- the application roller (1) conveys an excess of adhesive emulsion from the pan,
- the adhesive emulsion is transferred from the application roller (1) onto the film surface (5), kept in contact with the application roller (1) by the action of the relevant parts (protrusions) on the surface of the pressure roller (4),
- the pressure roller (4) co-rotates with the film to be coated (5),
- the application roller (1) acts in counter-rotation with the film to be coated with a speed of the application roller (1) comprised between 50 and 120%, preferably between 90 and 110% of the linear speed of the film.

26. Use of the adhesive bands according to claims from 1 to 18 to collate containers or label containers or objects of various types.
